# EUROPÄISCHE PATENTSCHRIFT

(11) **EP 2 680 937 B1**
(45) Veröffentlichungstag und Bekanntmachung des Hinweises auf die Patenterteilung: **04.04.2018**
(21) Anmeldenummer: 12703743.0
(22) Anmeldetag: 01.02.2012
(51) Int. Cl.: B01D 46/24, B01D 46/00, B01D 35/30

(54) **FILTEREINRICHTUNG MIT EINEM RINGFÖRMIGEN FILTERELEMENT**
FILTER DEVICE HAVING AN ANNULAR FILTER ELEMENT
SYSTÈME DE FILTRE MUNI D'UN ÉLÉMENT FILTRANT ANNULAIRE

(30) Priorität: 28.02.2011 DE 102011012633
(43) Veröffentlichungstag der Anmeldung: 08.01.2014
(73) Patentinhaber: Mann + Hummel GmbH, 71636 Ludwigsburg (DE)
(72) Erfinder: NEEF, Pascal, 71229 Leonberg (DE); KUSEBAUCH, Robert, 94405 Landau a. d. Isar (DE); KUPFER, Friedrich, 84163 Poxau (DE); LAMPERT, Johannes, 84032 Landshut (DE)
(86) Internationale Anmeldenummer: PCT/EP2012/051665
(87) Internationale Veröffentlichungsnummer: WO 2012/116869

(56) Entgegenhaltungen:
- EP-A1- 0 423 435
- EP-A1- 1 008 375
- EP-A2- 0 748 646
- WO-A1-2004/007052
- US-A1- 2007 227 963

## Beschreibung

### Technisches Gebiet

Die Erfindung bezieht sich auf eine Filtereinrichtung mit einem ringförmigen Filterelement nach dem Oberbegriff des Anspruches 1.

### Stand der Technik

In der EP 0 882 483 A2 wird eine Filtereinrichtung mit einem ringförmigen Filterelement beschrieben, das in einem topfförmigen Filtergehäuse angeordnet ist, welcher von einem Deckel zu verschließen ist. Das ringförmige Filterelement wird radial von außen nach innen durchströmt, das gereinigte Fluid wird anschließend axial abgeleitet. In das Filterelement ist ein Mittelrohr als Stützkörper integriert, der die Wandung des axialen Innenraums bildet, über den das gereinigte Fluid abgeleitet wird. Die Stirnseiten des Filterelementes sind von einer Endscheibe abgedeckt. Zusätzlich befindet sich an der dem Deckel zugewandten Stirnseite am Mittelrohr ein Dichtboden, der den axialen Innenraum verschließt. Der Dichtboden ist über einen Zuganker fest mit dem Deckel verbunden.

Die Montage und Demontage gestaltet sich aufgrund des Ankers, welcher das Filterelement durch den Innenraum axial durchragt und am gegenüberliegenden Gehäuseboden befestigt ist, verhältnismäßig aufwändig.

Aus der Offenlegungsschrift US 2007/0227963 A1 ist eine Filtereinrichtung mit einem ringförmigen Filterelement bekannt, welches über einen Adapterring an einem Gehäusedeckel befestigbar ist. Der Adapter weist einen Ventilsitz auf und ist dichtend mit einer Endscheibe des Filterelements verbunden.

Die Offenlegungsschrift WO 2004/007052 A1 offenbart eine Filtereinrichtung mit einem aufschraubbaren Gehäusetopf zur Aufnahme eines ringförmigen Filterelements. Mittels einer Drehbewegung sind Verbindungsmittel am Filterelement und am Gehäusetopf miteinander verbindbar oder voneinander lösbar.

Der Erfindung liegt die Aufgabe zugrunde, mit einfachen konstruktiven Maßnahmen bei kostengünstiger Herstellung die Montage einer Filtereinrichtung bzw. den Austausch des Filterelements zu vereinfachen.

### Offenbarung der Erfindung

Diese Aufgabe wird erfindungsgemäß mit den Merkmalen des Anspruches 1 gelöst. Die Unteransprüche geben zweckmäßige Weiterbildungen an.

Die erfindungsgemäße Filtereinrichtung - ein Gasfilter oder ein Flüssigkeitsfilter- weist ein ring- bzw. hohlzylindrisches Filterelement auf, das in Radialrichtung von dem zu filtrierenden Fluid durchströmt wird. Die bevorzugte Durchströmungsrichtung ist radial von außen nach innen, wobei das gereinigte Fluid über den Innenraum im Filterelement axial abgeleitet wird.

Das Filterelement ist in einem von einem Deckel zu verschließenden Filtergehäuse aufgenommen. Zur Montage wird das Filterelement in das Gehäuse eingesetzt und von dem Deckel verschlossen, wobei der Deckel mit dem Filterelement zu verbinden ist.

Bei der erfindungsgemäßen Ausführung ist ein als separates Bauteil ausgeführtes Verschlussteil vorgesehen, das sowohl mit dem Deckel als auch mit dem Filterelement zu verbinden ist und das verbindende Element zwischen Deckel und Filterelement bildet. Das Verschlussteil ist unabhängig bzw. eigenständig vom Deckel und vom Filterelement bzw. einem mit dem Filterelement verbundenen Bauteil ausgeführt. Des Weiteren ist vorgesehen, dass das Verschlussteil zumindest mit einem der Baueinheiten, vorzugsweise mit beiden Baueinheiten - Deckel und/oder Filterelement - lösbar ausgebildet ist. Aufgrund der Lösbarkeit ist sowohl die Montage als auch die Demontage bzw. der Austausch des Filterelementes vereinfacht. Das Filterelement und der Deckel bilden keine zwingende zusammenhängende Baueinheit mehr, die insgesamt in das Filtergehäuse eingesetzt bzw. aus diesem entnommen werden muss. Vielmehr ist es nun möglich, zunächst das Filterelement in das Gehäuse einzusetzen und anschließend über das Verschlussteil mit dem Deckel zu verbinden.

Für Wartungszwecke genügt es, das Filterelement auszutauschen und den Deckel beizubehalten. Hierdurch wird eine signifikante Kostenreduzierung erreicht.

Erfindungsgemäß ist vorgesehen, dass das Verschlussteil drehbar im Deckel und im Filterelement gelagert ist. Die Drehbarkeit hat den Vorteil, dass die Drehbewegung als Verriegelungsbewegung genutzt werden kann. Soweit das Verschlussteil gegenüber beiden Baueinheiten verdrehbar ist, bleiben während der Verriegelungsbewegung sowohl das Filterelement als auch der Deckel in ihrer bezogen auf das Gehäuse ortsfesten Lage, so dass sich lediglich das Verschlussteil verdreht. Hierdurch sind die Verriegelungskräfte signifikant herabgesetzt, da keine Drehbewegung des Deckels und/oder des Filterelements gegenüber einem Dichtungselement mit hoher Reibung erforderlich ist.

Gemäß einer zweckmäßigen Ausführung ist das Verschlussteil in der Montageposition formschlüssig mit dem Deckel und/oder dem Filterelement verbunden. Die Formschlussverbindung kann in einfacher Weise und vorteilhaft ohne Werkzeug hergestellt bzw. gelöst werden. Dies erfolgt beispielsweise dadurch, dass im Deckel eine zentrale Ausnehmung eingebracht ist, in die das Verschlussteil eingesetzt wird, wobei die Ausnehmung einen kleineren Durchmesser als das Verschlussteil aufweist. Auf Seiten des Filterelementes kann die Verbindung mit dem Verschlussteil vorzugsweise nach Art eines Bajonettverschlusses erfolgen, bei dem zunächst mittels einer axialen Bewegung das Verschlussteil an das Filterelement angenähert und anschließend das Verschlussteil um die Filterelementlängsachse verdreht wird, bis die endgültige Verriegelungsposition mit Formschluss zwischen Verschlussteil und Filterelement erreicht ist. Zur Realisierung des Bajonettverschlusses kann am Verschlussteil mindestens ein Verriegelungssteg angeordnet sein, der in montierter Position einen zugeordneten Verriegelungssteg am Filterelement hintergreift. Die Verriegelungsstege sind konstruktiv so ausgeführt, dass bei einer Drehbewegung zugleich ein axiales Annähern und Festklemmen erreicht wird. Im Übrigen kann bei einem alternativen Ausführungsbeispiel auch der Deckel mit dem Verschlussteil nach Art eines Bajonettverschlusses verbunden sein.

Des Weiteren kann es zweckmäßig sein, am Verschlussteil mindestens einen Verriegelungshaken anzuordnen, der in montierter Position einen zugeordneten Verriegelungsabschnitt am Deckel hintergreift. Dadurch ist das Verschlussteil in beide Achsrichtungen formschlüssig mit dem Deckel verbunden. Zum Lösen des Verschlussteils genügt es, den biegbaren Verriegelungshaken in die Außerverriegelungsposition zu drücken und zugleich das Verschlussteil axial aus dem Deckel zu entnehmen.

Bestandteil des ringförmigen Filterelementes ist zweckmäßigerweise ein Mittel- bzw. Stützrohr, das zur Verbesserung der Stabilität in das Filterelement eingebracht ist und die Wandung des zylinderförmigen Innenraums im Filterelement bildet. Gemäß bevorzugter Ausführung wird das Verschlussteil mit dem Mittelrohr verbunden, das zu diesem Zweck entsprechende Verriegelungselemente aufweist, die korrespondierend zu den Verriegelungselementen am Verschlussteil ausgebildet sind. In montierter Lage sitzt der Deckel unmittelbar auf der Stirnseite des Mittelrohrs auf.

In der Regel sind beide Stirnseiten des Filterelementes von Endscheiben verdeckt, welche ebenfalls Bestandteil des Filterelementes sind. Gegebenenfalls erfolgt die Verbindung zwischen Filterelement und Verschlussteil über eine der Endscheiben, die hierfür mit Verriegelungselementen versehen ist. Es kann auch zweckmäßig sein, zumindest eine Endscheibe und das Mittelrohr einteilig auszubilden und die Verriegelung mit dem Verschlussteil entweder mit der Endscheibe oder dem Mittelrohr zu bewerkstelligen.

Gemäß noch einer weiteren zweckmäßigen Ausführung ist vorgesehen, dass am Deckel ein die zentrale Ausnehmung, welche in den Deckel eingebracht ist, umschließender, zylindrischer Bund angeordnet ist, der sich nach Art eines Stutzens axial erstreckt. Der Bund ragt in montierter Position in das Mittelrohr ein und erleichtert die Lagepositionierung des Deckels in Bezug auf das Filterelement. Es kann zweckmäßig sein, am Bund eine Rippe oder dergleichen als Montagehilfe vorzusehen, die in eine zugeordnete Nut an der Innenwand des Mittelrohrs eingreift. Auf diese Weise ist die Drehlage des Deckels in Bezug auf das Filterelement eindeutig bestimmt.

Gemäß einer weiteren Vorteilhaften Ausführung ist vorgesehen, dass der Deckel als geschlossene Scheibe ausgeführt ist und an der dem Filterelement zugewandten Deckelinnenseite Formschlusselemente zur Verbindung mit dem Verschlussteil angeordnet sind. Wie in der Ausführung mit zentraler Ausnehmung im Deckel können die Formschlusselemente als Verriegelungsstege ausgebildet sein, die bei einer Relativdrehbewegung in eine Rastposition zueinander gelangen, so dass die Bauteile in Achsrichtung formschlüssig und sicher aneinandergehalten sind. In der Ausführung des Deckels ohne zentrale Ausnehmung befinden sich die deckelseitigen Formschlusselemente zweckmäßigerweise an der Innenseite eines axial über die Deckelinnenseite überstehenden Bundes und korrespondieren mit Formschlusselementen an der Außenseite eines Rings des Verschlussteils.

Es kann zweckmäßig sein, am Verschlussteil einen Schnapphaken zur Begrenzung der Relativdrehbewegung zwischen Deckel und Verschlussteil vorzusehen, so dass mit dem Ineinandergreifen der Formschlusselemente über ein begrenztes Winkelsegment eine Relativdrehbewegung zwischen Deckel und Verschlussteil möglich ist. Diese Relativdrehbewegung kann zum Verriegeln bzw. Entriegeln der Baueinheit, bestehend aus Deckel und Verschlussteil, am Filterelement bzw. dem Mittelrohr des Filterelementes genutzt werden. Zugleich verhindert der Schnapphaken ein versehentliches, unbeabsichtigtes Lösen des Verschlussteils vom Deckel. Sofern ein Lösen des Verschlussteils vom Deckel gewünscht ist, kann der Schnapphaken in seine Öffnungsposition kraftbeaufschlagt werden, so dass die Formschlusselemente am Verschlussteil und am Deckel außer Eingriff gebracht werden können.

Des Weiteren kann es zweckmäßig sein, am Deckel und am Filterelement bzw. einem mit dem Filterelement verbundenen Bauteil, insbesondere dem Mittelrohr, axial gerichtete Positionierungselemente vorzusehen, die zur Festlegung der Relativdrehlage zwischen dem Deckel und dem Filterelement dienen. Die axial gerichteten Positionierungselemente greifen beim axialen Aufsetzen des Deckels an das Filterelement bzw. dem Mittelrohr ineinander, so dass die Relativdrehlage eindeutig festgelegt ist. Über den Umfang verteilt können jeweils eine Mehrzahl derartiger Positionierungselemente vorgesehen sein, die beispielsweise als Ausnehmung bzw. Rippen ausgebildet sind, wobei der Anzahl der Positionierungselemente entsprechend eine Mehrzahl von Drehlagen zwischen Deckel und Filterelement bzw. Mittelrohr möglich sind.

Für eine erleichterte Betätigung und Handhabung des Verschlussteils kann dieses mit einem zentralen Betätigungsgriff versehen sein. Insbesondere in der geschlossenen Ausführung des Deckels ohne zentrale Ausnehmung ist der Betätigungsgriff gewölbt ausgebildet und ragt im montierten Zustand der Filtereinrichtung in den Innenraum des Filterelements ein, um ein Ergreifen und Betätigen, insbesondere ein Drehen des Verschlusselements zu erleichtern.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
Fig. 1 eine perspektivische Ansicht einer Filtereinrichtung mit einem ringförmigen Filterelement, das im Bereich einer Stirnseite von einem Deckel verschlossen ist, welcher Bestandteil eines Filtergehäuses ist,
Fig. 2 das Filterelement in Alleindarstellung mit einer Ansicht der Stirnseite, an die der Deckel anzuordnen ist,
Fig. 3 der Deckel in perspektivischer Darstellung,
Fig. 4 ein Mittelrohr, welches in das Filterelement eingesetzt ist, in Alleindarstellung,
Fig. 5 ein Verschlussteil, über das der Deckel mit dem Mittelrohr des Filterelementes verbunden wird, dargestellt in perspektivischer Ansicht,
Fig. 6 das Verschlussteil in einer weiteren Darstellung,
Fig. 7 einen Schnitt durch das Filterelement mit stirnseitig aufgesetztem Deckel einschließlich Verschlussteil in perspektivischer Darstellung,
Fig. 8 eine weitere Schnittdarstellung durch die Filtereinrichtung,
Fig. 9 der Verbindungsbereich mit Mittelrohr, Verschlussteil und Deckel in vergrößerter Darstellung,
Fig. 10 einen Ausschnitt aus dem Bereich der oberen Endscheibe mit angeformter Dichtlippe,
Fig. 11 die obere Endscheibe in montierter Position,
Fig. 12 eine perspektivische Ansicht einer Filtereinrichtung in einer weiteren Ausführung, dargestellt mit stirnseitigem Deckelelement,
Fig. 13 das Deckelelement in einer perspektivischen Einzeldarstellung,
Fig. 14 ein Verschlussteil in Einzeldarstellung, das mit dem Deckelteil gemäß Fig. 13 zu verbinden ist,
Fig. 15 Deckel und Verschlussteil in verbundener Lage,
Fig. 16 das Mittelrohr des Filterelements in einer ersten perspektivischen Ansicht,
Fig. 17 das Mittelrohr in einer zweiten perspektivischen Ansicht,
Fig. 18 das Filterelement mit stirnseitiger Endscheibe in einer ersten perspektivischen Ansicht,
Fig. 19 das Filterelement mit zweiter, axial gegenüberliegender Endscheibe in einer weiteren perspektivischen Ansicht,
Fig. 20 einen Schnitt durch die Filtereinrichtung,
Fig. 21 die geschnittene Filtereinrichtung in einer Perspektive von oben.

In den Figuren sind gleiche Bauteile mit gleichen Bezugszeichen versehen.

### Ausführungsform(en) der Erfindung

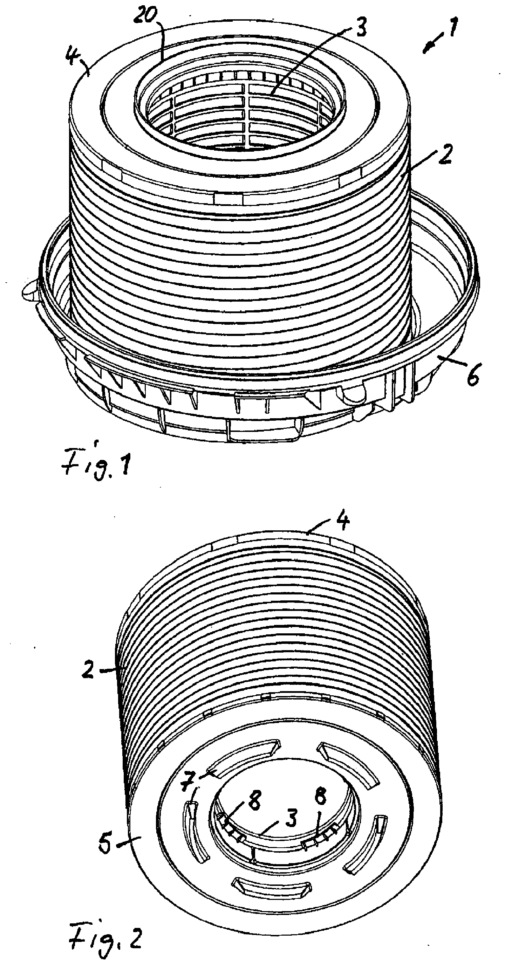

Wie den Fig. 1 und 2 zu entnehmen, weist die Filtereinrichtung 1 ein ringförmiges Filterelement 2 auf, dessen Stirnseiten jeweils von Endscheiben 4 bzw. 5 abgedichtet sind. In das Filterelement 2 ist ein Kunststoff-Mittelrohr 3 als Stützgerüst integriert, das zugleich die Innenwand des Innenraums des Filterelementes 2 bildet. Das Filterelement 2 wird radial von außen nach innen von dem zu reinigenden Fluid durchströmt, das anschließend in gereinigter Form axial aus dem Innenraum abgeleitet wird.

Zu dem Filtergehäuse gehört ein Deckel 6, der mit einer Stirnseite des Filterelementes 2 zu verbinden ist.

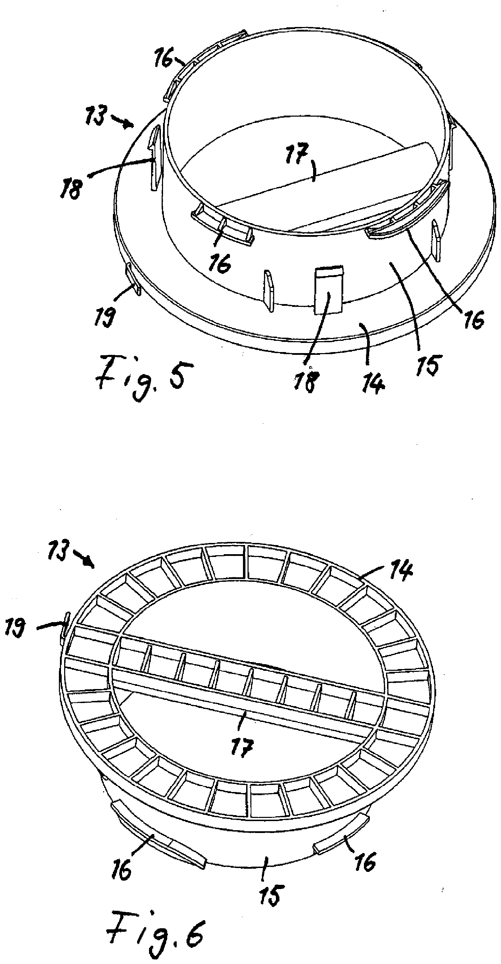

Wie Fig. 2 zu entnehmen, befinden sich an der Endscheibe 5, welche im montierten Zustand dem Deckel 6 zugewandt ist, axial überstehende Stützstege 7, die zur Abstützung des Deckels 6 dienen. Des Weiteren kann Fig. 2 entnommen werden, dass im Mittelrohr 3 auf der der Endscheibe 5 benachbarten Seite mit geringem axialen Abstand zur Stirnseite in Umfangsrichtung verlaufende Verriegelungsstege 8 angeordnet sind, welche sich an der Innenseite des Mittelrohrs 3 befinden und einteilig mit diesem ausgebildet sind. Über den Umfang verteilt sind mehrere derartige Verriegelungsstege 8 vorgesehen, die sich jeweils über ein begrenztes Winkelsegment erstrecken und vorzugsweise alle den gleichen axialen Abstand zur Stirnseite aufweisen. Die Verriegelungsstege 8 dienen zur formschlüssigen Verriegelung nach Art eines Bajonettverschlusses mit einem Verschlussteil, das in den Fig. 5 und 6 dargestellt ist.

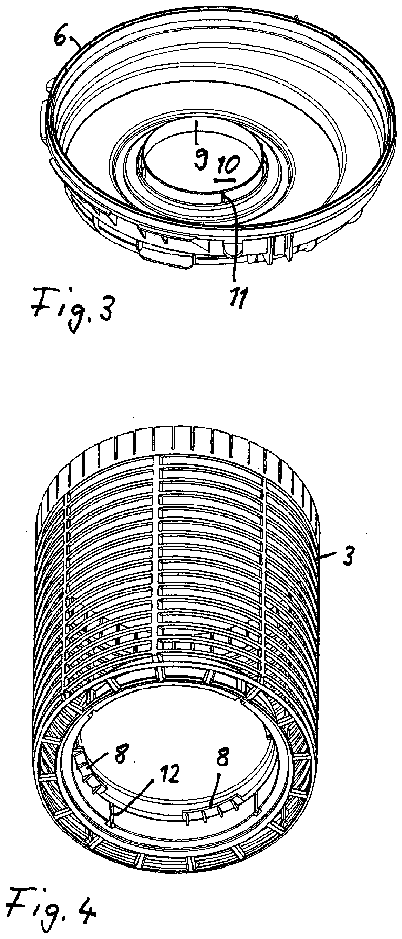

Wie der Ansicht des Deckels 6 gemäß Fig. 3 zu entnehmen, ist in den Deckel 6 eine zentrale Ausnehmung 10 eingebracht, die von einem axial überstehenden, stutzenartigen Bund 9 begrenzt ist. Auf der Außenseite des Bundes 9 befinden sich in regelmäßigem Abstand axial verlaufende Rippen 11, die einteilig mit dem Bund 9 ausgeführt sind und als Montagehilfe dienen. Im montierten Zustand ragen die Rippen 11 in zugeordnete Nuten 12 ein, welche, wie Fig. 4 zu entnehmen, auf der Innenseite in das Mittelrohr 3 benachbart zur Stirnseite des Mittelrohrs eingebracht sind. Über das Eingreifen der Rippen 11 in die Nuten 12 ist eine genaue Orientierung des Deckels in Drehrichtung gegeben.

Die Fig. 5 und 6 zeigen ein Verschlussteil 13 in zwei verschiedenen perspektivischen Darstellungen. Das Verschlussteil 13 dient als Verbindungselement zum Verbinden des Deckels 6 mit dem Filterelement 2 bzw. dem Mittelrohr 3 im Filterelement. Das Verschlussteil 13 weist einen radial erweiterten Kragen 14 und einen axial überstehenden Bund 15 auf, der gegenüber dem Kragen 14 einen kleineren Durchmesser besitzt. Der Bund 15 ist Träger von Verriegelungsstegen 16, die über den Umfang verteilt benachbart zur freien Stirnseite an der Außenseite des Bundes angeordnet sind. Die Verriegelungsstege 16 wirken in der montierten Position mit den Verriegelungsstegen 8 an der Innenwand des Mittelrohrs 3 nach Art eines Bajonettverschlusses zusammen. Ein Teil der Verriegelungsstege 16 an dem Verschlussteil 13 weist einen geschwungenen Abschnitt auf, der bei einer Drehbewegung des Verschlussteils 13 um die Achse der Filtereinrichtung ein Aufschieben auf die zugeordneten Verriegelungsstege 8 am Mittelrohr 3 erleichtern soll. Das Verschlussteil 13 ist außerdem mit einem Betätigungsgriff 17 versehen, der die zentrale Ausnehmung im hülsenförmigen Verschlussteil 13 überbrückt und eine leichtere Handhabung des Verschlussteiles gewährleisten soll.

Der Kragen 14 weist einen größeren Durchmesser auf als die zentrale Ausnehmung 10 des Deckels 6, so dass mit dem Einsetzen des Verschlussteils 13 in die Ausnehmung 10 des Deckels 6 der Deckel und das Verschlussteil in Achsrichtung formschlüssig miteinander verbunden sind.

Auf dem Kragen 14 sind mehrere Verriegelungshaken 18 über den Umfang verteilt angeordnet, die sich jeweils in Achsrichtung erstrecken und mit geringem radialem Abstand zur Außenwand des Bundes 15 angeordnet sind. Die Verriegelungshaken 18 dienen zum Festklemmen eines zugeordneten Verriegelungsabschnittes am Deckel 6, wobei es sich bei dem Verriegelungsabschnitt vorzugsweise um den Bund 9 am Deckel 6 handelt. Somit ist es möglich, durch axiales Einsetzen des Bundes 15 in die zentrale Ausnehmung 10 im Deckel 6 und dem Verriegeln der Verriegelungshaken 18 an der Stirnseite des Bundes 9 am Deckel 6 die beiden Bauteile in entgegengesetzte Achsrichtungen formschlüssig aneinander zu sichern. Zum Lösen der Verbindung müssen die Verriegelungshaken 18 geringfügig in Richtung auf den Bund 15 am Verschlussteil 13 gebogen werden, bis die Verriegelungshaken außer Eingriff mit dem Bund 9 am Deckel 6 gelangen und das Verschlussteil axial aus der zentralen Ausnehmung 10 im Deckel 6 wieder herausgenommen werden kann.

Wie den Fig. 5 und 6 weiter zu entnehmen, ist am Außenumfang des Kragens 14 des Verschlussteils 13 ein Rasthaken 19 angeordnet, welcher bei der Montage die Drehbewegung des Verschlussteils 13 begrenzt. Der Rasthaken 19 gelangt bei der Drehbewegung in Anschlag mit einem zugeordneten Rastglied am Deckel 6.

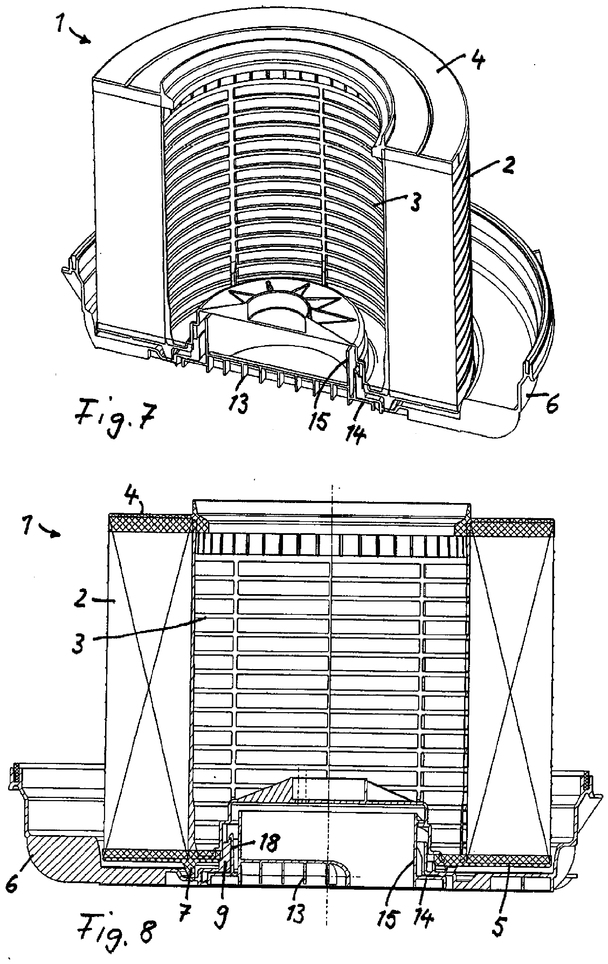

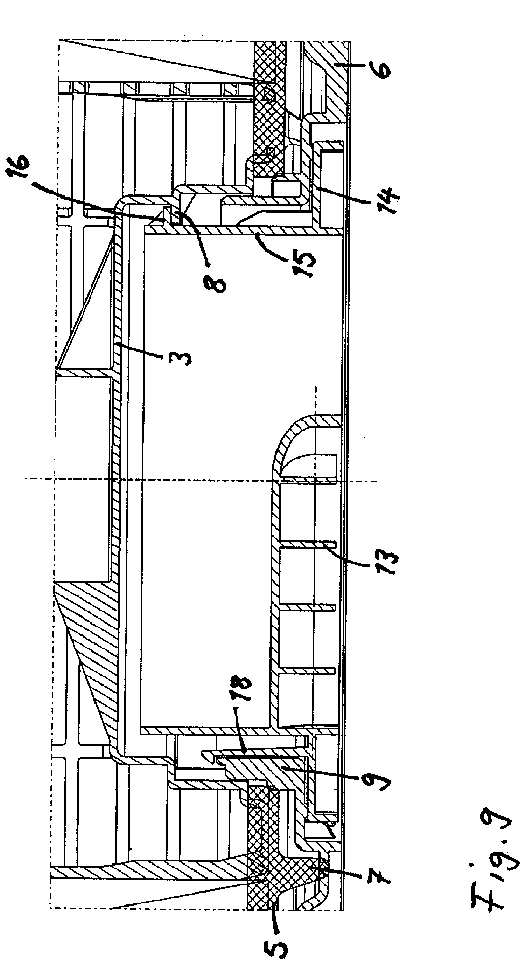

In den Fig. 7 bis 9 sind Schnittdarstellungen der Filtereinrichtung 1 mit dem Filterelement 2 und dem mithilfe des Verschlussteils 13 montierten Deckel 6 dargestellt. In die zentrale Ausnehmung im Deckel 6 ist das Verschlussteil 13 eingeschoben, wobei der radial verbreiterte Kragen 14 am Verschlussteil 13 aufgrund seines größeren Durchmessers als die zentrale Ausnehmung den Deckel 6 sicher am Filterelement 2 hält. Der Bund 15 des Verschlussteils 13 hintergreift mit den Verriegelungsstegen 16 die zugeordneten Verriegelungsstege 8 am Mittelrohr 3 (Fig. 9). Somit ist das Verschlussteil 13 gemeinsam mit dem Deckel 6 in Achsrichtung formschlüssig am Mittelrohr 3 und damit am Filterelement 2 gehalten.

Wie in Fig. 8 und 9 zu erkennen ist, befinden sich die Verriegelungshaken 18, welche einteilig am Verschlussteil 13 ausgebildet sind, in der Verriegelungsposition, in der der Verriegelungshaken 18 die Stirnkante des Bundes 9 am Deckel 6 hintergreift.

Die Stützstege 7, welche einteilig mit der Endscheibe 5 am Filterelement 2 ausgebildet sind, liegen in der montierten Position auf Kontakt zur Innenseite des Deckels 6. Die Stützstege 7 befinden sich radial außerhalb des Verschlussteils 13 und bewirken eine zusätzliche Stabilisierung des Deckels 6.

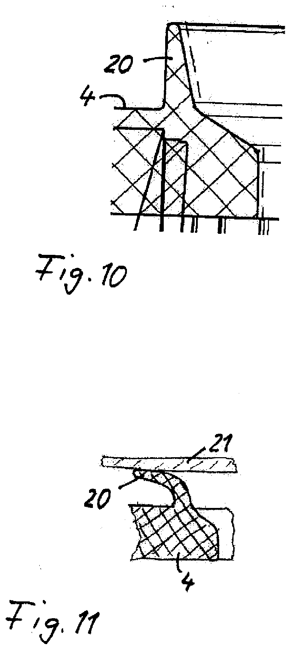

Wie den Fig. 10 und 11 zu entnehmen, ist einteilig mit der oberen Endscheibe 4 eine Dichtlippe 20 ausgebildet, welche axial gegenüber der Oberseite der Endscheibe 4 übersteht und ringförmig ausgebildet ist. Die Dichtlippe 20, die an der radialen Innenseite der ringförmigen Endscheibe 4 angeordnet ist, ist auch Fig. 1 dargestellt. In der montierten Position liegt die Dichtlippe 20, wie Fig. 11 zu entnehmen, dichtend an einem Gehäusebauteil 21 der Filtereinrichtung an, beispielsweise am Boden des topfförmigen Teils des Gehäuses. Die Dichtlippe 20 ist elastisch verformbar ausgebildet und wird beim Zusammenbau gegen das Gehäusebauteil 21 gepresst und verformt sich hierbei. Die durch die Verformung entstehende, auf die Eigenelastizität der Dichtlippe zurückgehende Kraft dient als Dichtkraft, mit der die Dichtlippe 20 gegen das Gehäusebauteil 21 drückt.

Es kann zweckmäßig sein, an jeder der beiden Endscheiben derartige Dichtlippen vorzusehen.

Die Endscheibe 4 und die einteilig mit der Endscheibe ausgebildete Dichtlippe 20 bestehen beispielsweise aus Polyurethan (PUR) oder aus einem sonstigen Material, das eine definierte Elastizität für eine elastische Verformung der Dichtlippe ermöglicht.

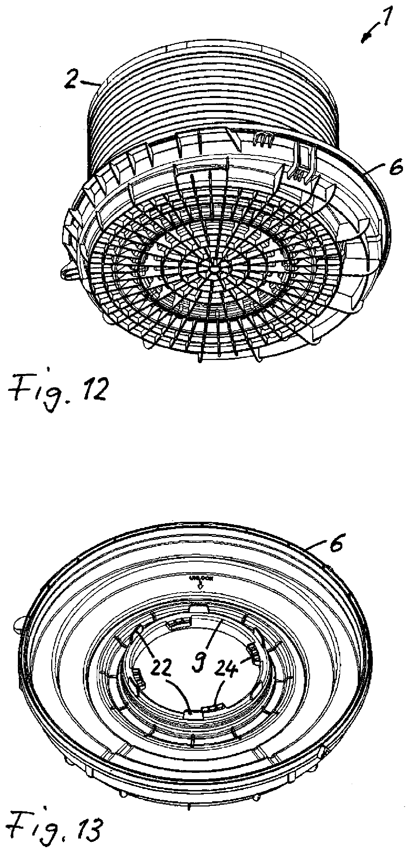

Die Figuren 12 bis 21 zeigen ein weiteres Ausführungsbeispiel für eine Filtereinrichtung, die ähnlich wie das vorhergehende Ausführungsbeispiel ausgeführt ist, jedoch Unterschiede insbesondere beim Deckel und beim Verschlusselement aufweist.

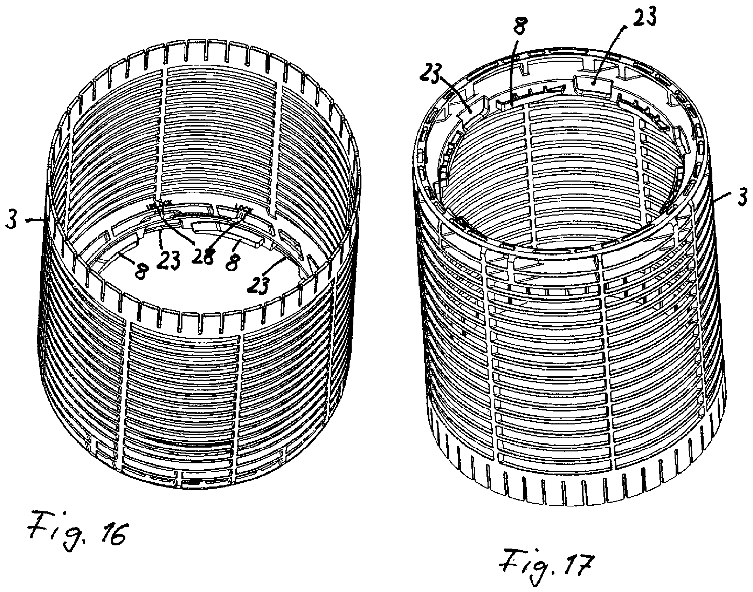

Wie Fig. 12 zu entnehmen, ist das ringförmige Filterelement 2 der Filtereinrichtung 1 stirnseitig von dem Deckel 6 verschlossen, der im Unterschied zum ersten Ausführungsbeispiel keine zentrale Ausnehmung aufweist, sondern als geschlossene Scheibe ausgebildet ist. Wie der perspektivischen Ansicht des Deckels 6 gemäß Fig. 13 zu entnehmen, steht an der Deckelinnenseite ein ringförmiger Bund 9 axial über, an dessen Stirnseite über den Umfang verteilt mehrere Rippen 22 axial überstehen, die Positionierungselemente zur Festlegung der Drehlage des Deckels gegenüber dem Filterelement bilden. Die Rippen 22 korrespondieren mit zugeordneten Positionierungselementen in Form von Aussparungen 23 (Fig. 17), die benachbart zur unteren Stirnseite in das Mittelrohr 3 eingebracht sind. Über den Umfang verteilt sind insgesamt sechs Rippen 22 bzw. Aussparungen 23 in gleichmäßigem Abstand vorgesehen, so dass eine Positionierung des Deckels am Mittelrohr in sechs verschiedenen Drehlagen mit jeweils einem Winkelabstand von 60° zueinander möglich ist.

Die radiale Außenfläche des Bundes 9 bildet eine Dichtfläche, an der die untere Endscheibe, welche das Filterelement verschließt, dichtend anliegt.

An der radialen Innenseite des Bundes 9 sind gleichmäßig über den Umfang verteilt insgesamt vier sich in Umfangsrichtung erstreckende Stege 24 angeordnet, die Formschlusselemente zur formschlüssigen Verbindung mit dem Verschlussteil bilden.

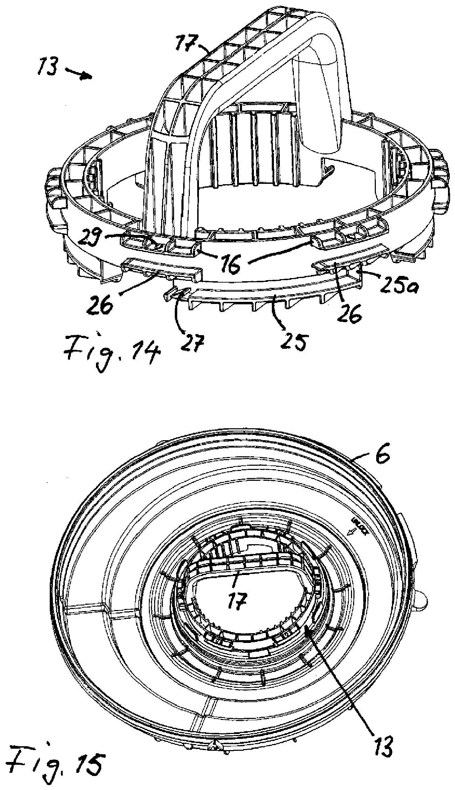

In Fig. 14 ist das Verschlussteil in Einzeldarstellung gezeigt, Fig. 15 zeigt die Verbindung von Deckel 6 und Verschlussteil 13. Das Verschlussteil 13 ist ringförmig ausgebildet und weist einen bügelförmigen Steg 17 auf, der im montierten Zustand über die Deckelinnenseite des Deckels 6 übersteht und das Ergreifen und Verdrehen des Verschlussteils erleichtert. An der radialen Außenfläche des Rings des Verschlussteils 13 befinden sich Stege 25 und 26, welche Formschlusselemente zum formschlüssigen Verbinden mit dem Deckel 6 bilden. Die Stege 25 und 26 korrespondieren mit den Stegen 24 an der Innenseite des Bundes 9 am Deckel 6 (Fig. 13). An einer Stirnseite des Stegs 25 befindet sich ein Schnapphaken 27, welcher gemeinsam mit dem axial versetzt angeordneten, darüberliegenden Steg 26 eine Einführöffnung für den Steg 24 am Deckel 6 bildet. Der Schnapphaken 27 erlaubt ein Einführen des Steges 24 in Umfangsrichtung in den Bereich des Stegs 25 am Verschlussteil 23, er verhindert jedoch ein unbeabsichtigtes Lösen von Deckel 6 und Verschlussteil 13 durch Verdrehen in Gegenrichtung, so dass der Steg 24 am Deckel 6 sich nur bis zum Erreichen des Schnapphakens 27 bewegen kann, der einen Anschlag bildet. Ein zweiter Anschlag ist durch eine Wand 25a gegeben, welche an der gegenüberliegenden Seite des Stegs 25 ausgebildet ist. Somit ist die Relativdrehbewegung zwischen Verschlussteil 13 und Deckel 6 durch die Wand 25a und den Schnapphaken 27 begrenzt. Zugleich erlaubt diese Relativdrehbewegung ein Überführen des Verschlussteils 13 zwischen einer Verriegelungsposition am Mittelrohr und einer Entriegelungs- bzw. Entnahmeposition, ohne dass für diese Drehbewegung auch eine Drehbewegung des Deckels erforderlich wäre. Der Deckel kann vielmehr während der Relativdrehbewegung des Verschlussteils 13 ortsfest am Filterelement bzw. Mittelrohr verharren.

Fig. 16 zeigt das Mittelrohr 3 in einer perspektivischen Ansicht von oben, Fig. 17 in einer perspektivischen Ansicht von unten, wobei die untere Seite von dem Deckel 6 zu verschließen ist. Benachbart zur unteren Stirnseite sind an der Innenseite des Mittelrohrs 3 über den Umfang verteilt und sich in Umfangsrichtung erstreckend Verriegelungsstege 8 angeordnet. Zwischen jeweils zwei Verriegelungsstegen 8, die auf Abstand zueinander liegen, befindet sich eine Aussparung 23, welche zur Stirnseite hin offen ausgebildet ist und die ein Positionierungselement bildet, das mit der axial überstehenden Rippe 22 am Bund 9 des Deckels 6 zusammenwirkt (Fig. 13). Die Verriegelungsstege 8 erlauben gemeinsam mit Verriegelungsstegen 16 am Verschlussteil 13 (Fig. 14) ein Verriegeln des Verschlussteils am Mittelrohr 3. Die Verriegelungsstege 16 am Verschlussteil 13 befinden sich ebenso wie die Stege 25 und 26 an der radialen Außenfläche des Rings des Verschlussteils 13. Die Verriegelungsstege 16 wirken mit den Stegen 26 an der Außenseite des Rings zusammen, wobei die Verriegelungsstege 16 und die Stege 26 die gleiche Erstreckung in Umfangsrichtung aufweisen, jedoch die Verriegelungsstege 16 axial gegenüber den Stegen 26 versetzt angeordnet sind und einen Durchgang zur Aufnahme der Verriegelungsstege 8 am Mittelrohr bilden.

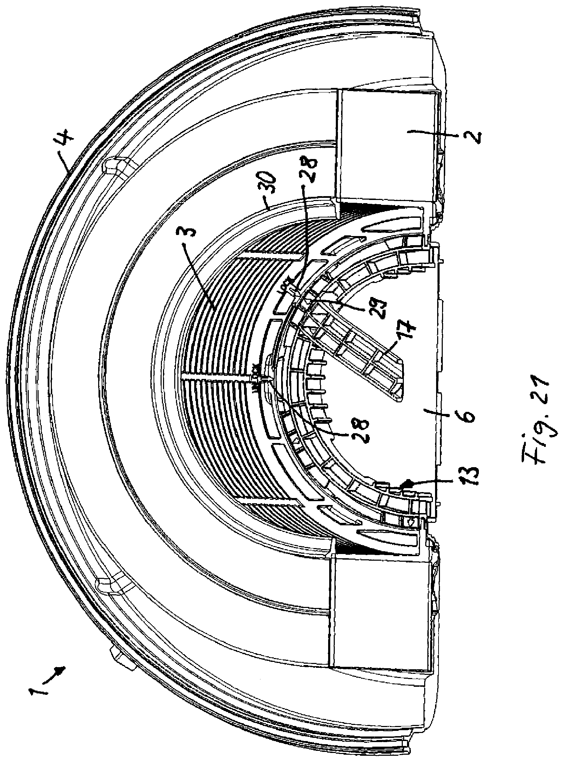

Wie Fig. 16 in Verbindung mit Fig. 21 zu entnehmen, befinden sich an der Innenseite des Mittelrohrs 3 benachbart zu den Verriegelungsstegen 8 bzw. den Aussparungen 23 Markierungen 28, welche die Verriegelungs- bzw. Entriegelungsposition des Verschlussteils 13 anzeigen sollen. Mit den Markierungen 28 am Mittelrohr 3 korrespondieren Markierungen 29 am Verschlussteil 13, die in den Verriegelungsstegen 16 angeordnet sind. Jeweils zwei in Umfangsrichtung versetzt angeordnete Markierungen an der Innenseite des Mittelrohrs 3 zeigen eine Verriegelungsposition und eine Entriegelungsposition an. Im montierten Zustand zeigt die Markierung 29 am Verschlussteil 13 auf die Verriegelungsmarkierung 28, zum Entriegeln muss das Verschlussteil 13 so weit verdreht werden, bis die Markierung 29 auf die Entriegelungsmarkierung am Mittelrohr 3 weist.

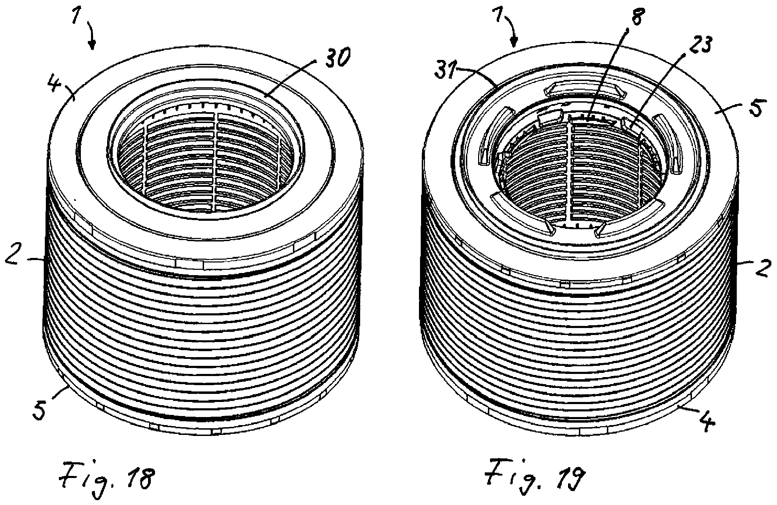

Fig. 18 zeigt die Filtereinrichtung 1 in einer perspektivischen Ansicht von oben, Fig. 19 von unten, jedoch ohne aufgesetzten Deckel. Das Filterelement 2 ist an beiden Stirnseiten von jeweils einer Endscheibe 4 bzw. 5 verdeckt, wobei an jeder Endscheibe eine ringförmige Dichtlippe 30 bzw. 31 axial übersteht. Die radiale Innenfläche der ringförmigen Endscheibe 4 bzw. 5 bildet jeweils eine Dichtfläche.

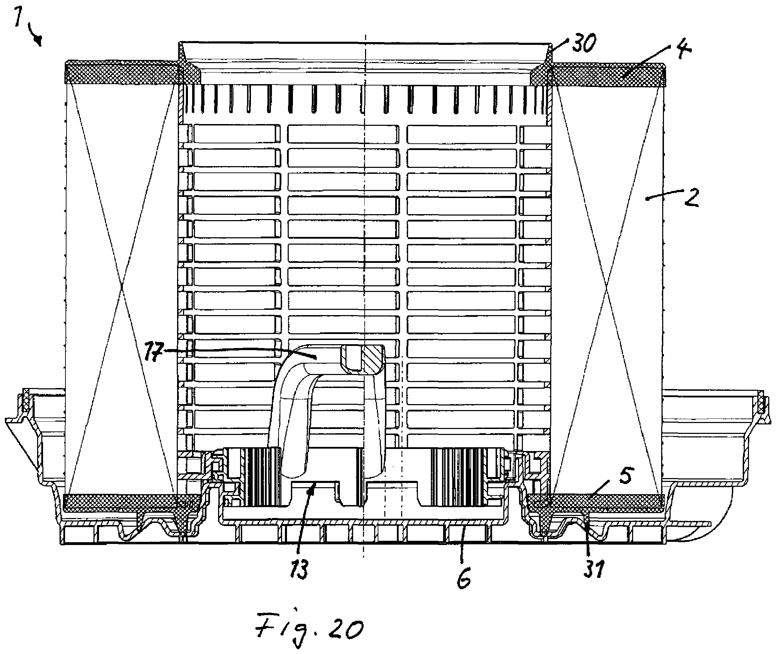

In den Figuren 20 und 21 ist die Filtereinrichtung 1 mit montiertem Deckel 6 sowie Verschlusselement 13 dargestellt. Wie Fig. 20 zu entnehmen, bildet die radial innen liegende Seite der Endscheibe 5 eine Dichtfläche und liegt dichtend an einem Abschnitt des Deckels 6 an, der in diesem Bereich konusförmig ausgebildet ist und einen etwa scheibenförmigen, radial außen liegenden Abschnitt mit einem kreisrunden innen liegenden Abschnitt des Deckels verbindet. Die Dichtlippe 31 an der unteren Endscheibe 5 liegt auf Kontakt zur Innenseite des Deckels 6.

In Fig. 21 ist das Verschlusselement 6 in der verriegelten Position gezeigt, in der die Markierung 29 am Verschlusselement 13 direkt auf die Verriegelungsmarkierung 28 an der Innenseite des Mittelrohrs 3 weist. Zum Entriegeln muss das Verschlussteil 13 durch Betätigen des Betätigungsgriffs 17 so weit verdreht werden, bis die Markierung 29 auf die zweite Markierung 28 weist, welche der Entriegelungsposition entspricht.

## Patentansprüche

1. Filtereinrichtung mit einem Deckel (6) eines Filtergehäuses, einem ringförmigen Filterelement (2), das mit dem Deckel (6) zu verbinden ist, und mit einem als separates Bauteil ausgeführten Verschlussteil (13), das mit dem Deckel (6) und mit dem Filterelement (2) zu verbinden ist, wobei die Verbindung zwischen dem Verschlussteil (13) und dem Deckel (6) und die Verbindung zwischen dem Verschlussteil (13) und dem Filterelement (2) lösbar ausgebildet ist, **dadurch gekennzeichnet, dass** das Verschlussteil (13) drehbar im Deckel (6) und im Filterelement (2) gelagert ist, wobei am Deckel (6) und am Filterelement (2) bzw. einem mit dem Filterelement (2) verbundenen Bauteil (3) axial gerichtete Positionierungselemente (11, 12, 22, 23) zur Festlegung der Drehlage zwischen Deckel (6) und Filterelement (2) angeordnet sind, wobei eine Drehbewegung des Verschlussteils (13) gegenüber Deckel (6) und Filterelement (2) zur Verriegelung des Filterelements (2) an dem Deckel (6) dient.

2. Filtereinrichtung nach Anspruch 1, **dadurch gekennzeichnet, dass** das Verschlussteil (13) formschlüssig mit dem Deckel (6) und/oder dem Filterelement (2) zu verbinden ist.

3. Filtereinrichtung nach Anspruch 2, **dadurch gekennzeichnet, dass** der Deckel (6) geschlossen ausgeführt ist und an der Deckelinnenseite Formschlusselemente (24) zur Verbindung mit dem Verschlussteil (13) angeordnet sind.

4. Filtereinrichtung nach Anspruch 2, **dadurch gekennzeichnet, dass** das Verschlussteil (13) in eine zentrale Ausnehmung (10) im Deckel (6) einsetzbar ist.

5. Filtereinrichtung nach einem der Ansprüche 2 bis 4, **dadurch gekennzeichnet, dass** das Verschlussteil (13) nach Art eines Bajonettverschlusses mit dem Filterelement (2) und/oder dem Deckel (6) zu verbinden ist.

6. Filtereinrichtung nach einem der Ansprüche 2 bis 5, **dadurch gekennzeichnet, dass** am Verschlussteil (13) mindestens ein Verriegelungssteg (16) angeordnet ist, der in montierter Position einen zugeordneten Verriegelungssteg (8,16) am Filterelement (2) hintergreift.

7. Filtereinrichtung nach einem der Ansprüche 2 bis 6, **dadurch gekennzeichnet, dass** am Verschlussteil (13) mindestens ein Verriegelungshaken (18) angeordnet ist, der in montierter Position einen zugeordneten Verriegelungsabschnitt (9) am Deckel (6) hintergreift.

8. Filtereinrichtung nach einem der Ansprüche 2 bis 7, **dadurch gekennzeichnet, dass** am Verschlussteil (13) ein Schnapphaken (27) zur Begrenzung der Relativdrehbewegung zwischen Deckel (6) und Verschlussteil (13) angeordnet ist.

9. Filtereinrichtung nach einem der Ansprüche 1 bis 8, **dadurch gekennzeichnet, dass** in das ringförmige Filterelement (2) ein Mittelrohr (3) eingesetzt und das Verschlussteil (13) mit dem Mittelrohr (3) zu verbinden ist.

10. Filtereinrichtung nach einem der Ansprüche 1 bis 9, **dadurch gekennzeichnet, dass** das Filterelement (2) an mindestens einer Stirnseite von einer Endscheibe (4, 5) verschlossen ist, mit welcher vorzugsweise eine Dichtlippe (20) einteilig ausgebildet ist und welche vorzugsweise aus Polyurethan (PUR) besteht.

11. Filtereinrichtung nach einem der Ansprüche 4 bis 10, **dadurch gekennzeichnet, dass** am Deckel (6) ein die zentrale Ausnehmung (10) umschließender zylindrischer Bund (9) angeordnet ist.

12. Filtereinrichtung nach einem der Ansprüche 1 bis 11, **dadurch gekennzeichnet, dass** das Verschlussteil (13) einen zentralen Betätigungsgriff (17) aufweist, welcher vorzugsweise gewölbt ausgebildet ist und/oder im montierten Zustand in den Innenraum des Filterelements (2) einragt.

13. Filtereinrichtung nach einem der Ansprüche 1 bis 12, **dadurch gekennzeichnet, dass** eine Endscheibe (5) des Filterelements (2) auf ihrer radial innen- und/oder außenliegenden Seite dichtend am Deckel (6) anliegt und/oder **dass** eine Endscheibe (5) des Filterelements (2) axial dichtend am Deckel (6) anliegt.

## Claims

1. Filtering device with a cover (6) of a filter housing, with an annular filter element (2) to be connected to the cover (6), and with a closing member (13) designed as separate component to be connected to the cover (6) and to the filter element (2), wherein the connection between the closing member (13) and the cover (6) and the connection between the closing member (13) and the filter element (2) is realized detachably, **characterized in that** the closing member (13) is rotationally mounted in the cover (6) and in the filter element (2), wherein axially directed positioning elements (11, 12, 22, 23) for defining the rotational position between cover (6) and filter element (2) are disposed at the cover (6) and at the filter element (2) or at a component (3) connected to the filter element (2), wherein a rotational motion of the closing member (13) in relation to the cover (6) and the filter element (2) serves for locking the filter element (2) to the cover (6).

2. Filtering device according to claim 1, **characterized in that** the closing member (13) is to be connected in a positive fit to the cover (6) and/or to the filter element (2).

3. Filtering device according to claim 2, **characterized in that** the cover (6) is closed and that form-fit elements (24) for allowing the connection to the closing member (13) are disposed at the interior side of the cover.

4. Filtering device according to claim 2, **characterized in that** the closing member (13) can be inserted into a central recess (10) in the cover (6).

5. Filtering device according to one of the claims 2 to 4, **characterized in that** the closing member (13) is to be connected to the filter element (2) and/or to the cover (6) in the manner of a bayonet lock.

6. Filtering device according to one of the claims 2 to 5, **characterized in that** at least one locking bar (16), which, in mounted position, engages an allocated locking bar (8, 16) at the filter element (2) from behind, is disposed at the closing member (13).

7. Filtering device according to one of the claims 2 to 6, **characterized in that** at least one locking hook (18), which, in mounted position, engages an allocated locking portion (9) at the cover (6) from behind, is disposed at the closing member (13).

8. Filtering device according to one of the claims 2 to 7, **characterized in that** a snap-in hook (27) for limiting the relative rotary motion between cover (6) and closing member (13) is disposed at the closing member (13).

9. Filtering device according to one of the claims 1 to 8, **characterized in that** a central tube (3) is inserted into the annular filter element (2) and that the closing member (13) is to be connected to the central tube (3).

10. Filtering device according to one of the claims 1 to 9, **characterized in that** the filter element (2) is closed on at least one front side by an end disk (4, 5) with which preferably a sealing lip (20) is realized in one piece and which is made preferably of polyurethane (PUR).

11. Filtering device according to one of the claims 4 to 10, **characterized in that** cylindrical collar (9) enclosing the central recess (10) is disposed at the cover (6).

12. Filtering device according to one of the claims 1 to 11, **characterized in that** the closing member (13) features a central operating handle (17) which is preferably curved and/or protrudes, in mounted state, into the interior space of the filter element (2).

13. Filtering device according to one of the claims 1 to 12, **characterized in that** an end disk (5) of the filter element (2) is applied sealingly on its radially inner or outer side to the cover (6) and/or that an end disk (5) of the filter element (2) is axially sealingly applied to the cover (6).

## Revendications

1. Dispositif de filtration avec un couvercle (6) d'un boîtier de filtre, avec un élément filtrant (2) annulaire devant être relié au couvercle (6), et avec un obturateur (13) réalisé en tant que composant séparé et devant être relié au couvercle (6) et à l'élément filtrant (2), la liaison entre l'obturateur (13) et le couvercle (6) et la liaison entre l'obturateur (13) et l'élément filtrant (2) étant amovible, **caractérisé en ce que** l'obturateur (13) est monté dans le couvercle (6) et dans l'élément filtrant (2) de manière à pouvoir tourner, des éléments de positionnement (11, 12, 22, 23) orientés axialement étant disposés sur le couvercle (6) et sur l'élément filtrant (2) ou sur un composant (3) relié à l'élément filtrant (2) pour définir la position de rotation entre le couvercle (6) et l'élément filtrant (2), un mouvement de rotation de l'obturateur (13) par rapport au couvercle (6) et à l'élément filtrant (2) servant de verrouillage de l'élément filtrant (2) sur le couvercle (6).

2. Dispositif de filtration selon la revendication 1, **caractérisé en ce que** l'obturateur (13) doit être relié par crabotage au couvercle (6) et/ou à l'élément filtrant (2).

3. Dispositif de filtration selon la revendication 2, **caractérisé en ce que** le couvercle (6) est exécuté de façon fermée et que des éléments crabotés (24) sont disposés sur le côté intérieur du couvercle pour permettre le raccordement avec l'obturateur (13).

4. Dispositif de filtration selon la revendication 2, **caractérisé en ce que** l'obturateur (13) peut être inséré dans un évidement (10) central dans le couvercle (6).

5. Dispositif de filtration selon l'une des revendications 2 à 4, **caractérisé en ce que** l'obturateur (13) doit être relié à l'élément filtrant (2) et/ou au couvercle (6) comme un raccord à baïonnette.

6. Dispositif de filtration selon l'une des revendications 2 à 5, **caractérisé en ce qu'**au moins une languette de verrouillage (16) est disposée sur l'obturateur (13), cette languette passant, en position montée, derrière une languette de verrouillage (8, 16) correspondante sur le dispositif de filtration (2).

7. Dispositif de filtration selon l'une des revendications 2 à 6, **caractérisé en ce qu'**au moins un crochet de verrouillage (18) est disposé sur l'obturateur (13, ce crochet passant, en position montée, derrière une section de verrouillage (9) correspondante sur le couvercle (6).

8. Dispositif de filtration selon l'une des revendications 2 à 7, **caractérisé en ce qu'**un crochet à encliquetage (27) est disposé sur l'obturateur (13) pour limiter le mouvement de rotation relatif entre le couvercle (6) et l'obturateur (13).

9. Dispositif de filtration selon l'une des revendications 1 à 8, **caractérisé en ce qu'**un tube central (3) est emboîté dans l'élément filtrant (2) annulaire et que l'obturateur (13) doit être relié au tube central (3).

10. Dispositif de filtration selon l'une des revendications 1 à 9, **caractérisé en ce que** l'élément filtrant (2) est fermé sur au moins une face frontale par un disque d'extrémité (4, 5) avec lequel est de préférence réalisé une lèvre d'étanchéité (20) en un seul bloc et qui est de préférence réalisée en polyuréthane (PUR).

11. Dispositif de filtration selon l'une des revendications 4 à 10, **caractérisé en ce qu'**un collet (9) cylindrique entourant l'évidement (10) central est disposé sur le couvercle (6)

12. Dispositif de filtration selon l'une des revendications 1 à 11, **caractérisé en ce que** l'obturateur (13) présente une poignée de manoeuvre (17) centrale qui est de préférence bombée et/ou pénètre, en état monté, dans l'espace intérieur de l'élément filtrant (2).

13. Dispositif de filtration selon l'une des revendications 1 à 12, **caractérisé en ce qu'**un disque d'extrémité (5) de l'élément filtrant (2) s'applique sur son côté radialement interne et/ou externe de manière étanche contre le couvercle (6) et/ou qu'un disque d'extrémité (5) de l'élément filtrant (2) s'applique contre le couvercle (6) en assurant une étanchéité axiale.
